# EUROPÄISCHE PATENTSCHRIFT

(11) **EP 1 241 118 B1**
(45) Veröffentlichungstag und Bekanntmachung des Hinweises auf die Patenterteilung: **24.05.2006**
(21) Anmeldenummer: 02003096.1
(22) Anmeldetag: 13.02.2002
(51) Int. Cl.: B65G 67/02, B65G 63/00, B65G 63/02

(54) **Verfahren und Vorrichtung zum Ver- bzw. Entladen von auf Paletten angeordnetem, grossvolumigem Frachtgut von der Strasse auf die Schiene und umgekehrt**
Method and device for loading and unloading palletized bulk goods from road vehicles onto railway trains and vice versa
Procédé et dispositif de chargement et déchargement de marchandises volumineuses palettisées des véhicules routiers aux rames ferroviaires et inversement

(30) Priorität: 16.02.2001 DE 10107306
(43) Veröffentlichungstag der Anmeldung: 18.09.2002
(73) Patentinhaber: Marten, Hans-F., 57223 Kreuztal (DE)
(72) Erfinder: Marten, Hans-F., Dipl.-Ing., 57223 Kreuztal (DE)
(74) Vertreter: Valentin, Ekkehard

(56) Entgegenhaltungen:
- DE-A1- 4 301 019
- DE-A1- 4 334 987
- US-A- 4 522 546
- US-A- 4 543 027

## Beschreibung

Die Erfindung betrifft ein Verfahren und eine Vorrichtung zum Ver- bzw. Entladen von auf Paletten angeordnetem, großvolumigem Frachtgut wie Container, Sattelanhänger mit und ohne Zugmaschine, LKW oder Anhänger, das von der Straße auf ein Schienenfahrzeug und umgekehrt verbracht wird, wozu beidseitig von Gleisen Verladerampen mit einzelnen oder mehreren in Gleislängsrichtung nacheinanderfolgenden, separaten, das Verladegut quer zur Gleislängsrichtung zu- und abtransportierenden Fördermitteln vorgesehen sind.

Der bisher übliche und gebräuchliche LKW und PKW-Bahntransport erfordert viel Zeitaufwand und verursacht damit Kosten, weil die Fahrzeuge in Längsrichtung des Güterzuges nacheinander auf dem Güterzug bzw. die einzelnen Waggons gefahren und für den Transport gesichert werden müssen. Die Sattelschlepper und deren Fahrer müssen zwangsläufig den Schienentransport mitmachen. Auch am Zielort ist dann nur ein Entladen nacheinander mit entsprechend hohem Aufwand möglich. Ein mögliches Be- und Entladen aus beliebigen Positionen und aus der Mitte des Güterzuges heraus durch Krananlagen schließt sich in der Regel wegen der unvermeidlich vorhandenen Oberleitungen aus.

Um hier eine diesbezüglich größere Flexibilität zu erreichen, ist durch die DE 43 01 019 A1 ein Ver- bzw. Entladesystem der eingangs genannten Art bekanntgeworden. Es werden dort Verladepaletten eingesetzt, auf denen Fahrzeuge und dergleichen Frachtgut bereitgestellt werden können, die sich anschließend quer zu ihrer Längsstreckung auf das jeweilige Schienenfahrzeug bzw. dessen Waggons schieben und dort verriegeln lassen. Die Verladepaletten verbleiben während des Transports auf dem jeweiligen Waggon. Wenngleich dieses System aufgrund der beidseitigen Anordnung der Paletten auf den Verladerampen ein gleichzeitiges Ver- sowie Entladen eines Zuges erlaubt, so sind der Flexibilität doch Grenzen gesetzt bzw. ist die Beschickung der Paletten problematisch, weil jeder Palette zur Beladung eine gesonderte Auf- und Abfahrmöglichkeit für das das Frachtgut zubringende Kraftfahrzeug vorhanden sein muß. Die Verladepaletten selbst sind in sehr aufwendiger Weise selbstrollend ausgebildet, und außerdem muß eine Überbrückung vorgesehen werden, damit die Oberseiten der Verladerampen mit der Oberseite eines Waggons bündig abschließen.

Der Erfindung liegt die Aufgabe zugrunde, ein Verfahren und eine Vorrichtung der eingangs genannten Art zu schaffen, die den Transport von Fahrzeugen und/oder Frachtgütern zu fahrplanmäßig festen Zeiten auf der Schiene zwischen zentralen Zielorten und auch durch Umladen auf Züge in andere Fahrtrichtungen kostengünstig, schnell und flexibel mit einfachen Mitteln bzw. einfacher Logistik über mittlere und größere Entfernungen erlauben.

Diese Aufgabe wird mit einem Verfahren erfindungsgemäß durch die Abfolge der im Anspruch 1 angegebenen Schritte a) bis g) gelöst. Es läßt sich damit ein sukzessives Laden zunächst der einzelnen bereitgestellten Leerpaletten in den aufeinanderfolgenden Fördermittelstationen über eine einzige Rampe mit Zu- und Auffahrt ermöglichen. Denn nach dem Beladen einer oder mehrerer Paletten in der ersten Station und deren Abtransport in eine gleisnahe Position zur späteren Beladung des Schienenfahrzeuges wird stets für eine freie Fahrbahn und damit ungehinderte Wegfahrt des Straßenfahrzeuges in dessen Fahrtrichtung gesorgt, das die Verladerampe über die Abfahrt verlassen kann. Die Wegfahrt ist dann nicht erforderlich, wenn der gesamte LKW oder dergleichen auf das Schienenfahrzeug übergeladen wird. Die in diesem Fall insgesamt zu verladenden Fahrzeuge können sich allerdings ungehindert in Fahrtrichtung über die gesamte Verladerampe von vornherein wie auf einer Perlenschnur aneinanderreihen. An den zentralen Be- und Entladeorten der Bahn brauchen lediglich die erforderlichen Rampen und der Straßenanschluß erstellt zu werden. Die Positionierung der Güterwagen bzw. Waggons für das Be- und Entladen, der Antrieb für die Fördermittel sowie das exakte Positionieren und Sichern der Paletten auf den Güterwagen lassen sich vollautomatisch durchführen und durch Einsatz bekannter Techniken sicher gewährleisten.

Das Be- und Entladen der Fahrzeuge und/oder Frachtgüter kann nach einer Ausgestaltung der Erfindung gleichzeitig oder in beliebiger Reihenfolge aus jeder beliebigen Position auf und von dem Schienenfahrzeug innerhalb der Be- und Entladestationen erfolgen. Bei der Abnahme des Frachtgutes auf der gegenüberliegenden Entladeseite wird ebenso sukzessive vorgegangen, wie beim Beladen der bereitgestellten und beladenen Paletten auf der Ladeseite der Gleise, so daß auch beim Abtransport für die Kraftfahrzeuge eine stets freie Fahrbahn vorhanden ist.

In jedem Fall liegen das Aufbringen und die Entnahme der Fahrzeuge und/oder Frachtgüter auf und von den Paletten sowie das Sichern und Entsichern der Fahrzeuge und/oder Frachtgüter vor und nach dem Transport auf den Ent- und Belade-Rampen neben den Gleisen als sogenannter Rüstvorgang außerhalb der Transportzeit des Schienenfahrzeuges. Die Kraftfahrzeuge können durch die Fahrer direkt auf den Paletten an den Beladeorten abgestellt bzw. von den Zielorten abgeholt werden. Durch den Einsatz von bahneigenen Sattelschleppern mit Anhängerkupplungen an den Be- und Entladeorten könnte das Be- und Entladen der Paletten unabhängig voneinander geschehen. Die beispielsweise an- und abtransportierenden Zugfahrzeuge werden dann nicht mehr für das Be- und Entladen der Paletten benötigt, d.h. die Zugfahrzeuge und ihre Fahrer wären sofort frei für anderweitige Transportaufgaben. Das erfindungsgemäße Verfahren erlaubt es grundsätzlich, daß sich ein Schienentransport der Sattelschlepper und der Zugmaschinen erübrigt. Es braucht damit keine unnötige Totlast transportiert zu werden, und die Fahrer der Sattelschlepper oder der Zugmaschinen müssen den Gütertransport auf der Schiene nicht mehr begleiten.

Wenn nach einem Vorschlag der Erfindung die Fördermittel der Beladeseite und der Entladeseite mit sich überlagernden Transportbewegungen betrieben werden, läßt sich ein weiterer Zeitgewinn erreichen und ein mit dem schnellen Zu- und Ausstieg im Personenverkehr vergleichbar schnelles Be- und Entladen des Schienenfahrzeugs begünstigen.

Nach einer bevorzugten Ausführung der Erfindung führen die Fördermittel in ihrem Bewegungsablauf sowohl lineare Fahrbewegungen als auch Hub- und Senkbewegungen durch. Es liegt damit ein vollautomatischer Ablauf zum Aufnehmen, Weiter- bzw. Zwischenfördem und Absetzen der Paletten vor.

Wenn vorzugsweise die Fördermittel mit einem langen Transport-Verfahrweg und einem kürzeren Be- und Entlade-Verfahrweg beaufschlagt werden, läßt sich eine der jeweiligen Aufgabe angepaßte, wegoptimierte Funktionsteilung erreichen.

Eine vorteilhafte Ausführung der Erfindung sieht vor, daß mit den Verfahrbewegungen der Fördermittel einhergehend die gleisentfemten Positionen der Fördermittel-Beladestationen mit Fahrbahn-Abdeckungen belegt werden. Hiermit läßt sich sicherstellen, daß die Kraftfahrzeuge auf der Rampe stets eine geschlossene Fahrbahn bzw. einen durchgängig befahrbaren Untergrund vorfinden, womit die ungehinderte Befahrbarkeit der Rampen für das Be- und Entladen der Paletten gewährleistet wird.

Ein weiterer vorteilhafter Vorschlag der Erfindung sieht vor, daß bei einem Be- und/oder Entladevorgang mit mehreren Paletten pro Fördermittel-Beladestation bzw. -Entladestation das Schienenfahrzeug nach jedem Be- und/oder Entladevorgang zur folgenden Ent- und Beladung vorgefahren wird und danach jeweils der Schritt g) nach Anspruch 1 durchgeführt wird, vorzugsweise zusammen mit den Maßnahmen nach den Ansprüchen 2 bis 4. Die Anzahl der Fördermittel-Belade- und Fördermittel-Entladestationen je Umschlagort richtet sich nach dem anfallenden Güterumschlag und kann jederzeit beliebig erweitert werden. Eine Verdoppelung der Kapazität wird hierbei beispielsweise schon durch den Einsatz von vier statt zwei Paletten je Fördermittel-Belade- bzw. Fördermittel-Entladestation erreicht. Die Entladung des Güterzuges bzw. Schienenfahrzeuges und der Abtransport der Paletten läuft im übrigen in der gleichen Reihenfolge wie der beschriebene Antransport und das Beladen der Paletten ab. Nach jeder Anlieferung bzw. nach jedem Abtransport durch das Schienenfahrzeug wird die zuvor Entladeseite zur Beladeseite, d.h. das Beladen wird jeweils von der Seite her durchgeführt, auf der sich die leeren Paletten befinden, während das Entladen auf der Seite durchgeführt wird, auf der sich keine Paletten befinden.

Bei einer bevorzugten Vorrichtung zur Be- und Entladung, insbesondere zum Durchführen des Verfahrens, sind erfindungsgemäß die in den Fördermittel-Belade- und Fördermittel-Entladestationen angeordneten Fördermittel als Hubbalken ausgebildet. Solche bekannten, bewährten Hubbalken werden seit langem z.B. in Hütten- und Walzwerksbetrieben für den Schwertransport von Brammen, Coils oder dergleichen eingesetzt. Sie führen die notwendigen Hebe-, Verfahr- und Absetzbewegungen vollautomatisch durch. Die erforderlichen Hub- und Absenkbewegngen lassen sich beispielsweise hydraulisch durch ein gekoppeltes, gemeinsames Drehen von exzentrischen Achsen zu den Laufrädern der Hubbalken bewirken.

Mit den Hubbalken vorzugsweise fest verbundene Fahrbahn-Abdeckungen stellen hierbei zwangsläufig sicher, daß die die Rampe befahrenden Kraftfahrzeuge eine durchgängig geschlossene Fahrbahn vorfinden, da sie jeder Hubbalkenbewegung folgen.

Nach einem Vorschlag der Erfindung sind den Hubbalken-Lauf- und Stützrädern in ihren Fahrbahnen obere und untere Führungen zugeordnet. Hiermit läßt sich bei einem kopflastigen Transport von Frachtgütern auf dem nicht abgestützten Kopfende der Hubbalken in einfacher Weise eine Stabilisierung der Hubbalken erreichen.

Ein Vorschlag der Erfindung sieht vor, daß die linearen Verfahrantriebe der Hubbalken als Tandem-Hydraulikzylinder ausgebildet sind. Dieser ermöglicht eine Funktionseinheit für sowohl einen langen Transporthub als auch einen kurzen Be- und Entladehub beim Überleiten der beladenen Palette auf das Schienenfahrzeug bzw. beim Abnehmen der beladenen Palette von dem Schienenfahrzeug.

Wenn zum Transport des Frachtgutes vorzugsweise Niederflurwagen zum Einsatz kommen, wie sie in der Art der "Rollenden Landstraße" üblich sind, lassen sich deren Brücken sogleich als Palette verwenden. Diese Niederflurwagen halten die vorgegebenen zulässigen Lademasse - auch bei Sattelanhängern - ohne weitere Änderung bzw. Baumaßnahme ein.

Weitere Einzelheiten und Vorteile der Erfindung ergeben sich aus der nachfolgenden Beschreibung von in den Zeichnungen sehr schematisch dargestellten Ausführungsbeispielen der Erfindung. Es zeigen:
- Figur 1: in der Seitenansicht als Einzelheit eines Schienenfahrzeugs drei mit unterschiedlichem Frachtgut beladene Waggons;
- Figur 2: im Querschnitt mit beidseitig zu einem Gleisfahrzeug angeordneten Fördermitteln das Funktionsprinzip zum Be- und Entladen des Gleis- bzw. Schienenfahrzeugs;
- Figur 3: einen Schnitt entlang der Linie III-III von Figur 7;
- Figur 4: einen Schnitt entlang der Linie IV-IV von Figur 8;
- Figuren 5a) bis 5d): in schematischer Draufsicht eine drei Fördermittel-Stationen aufweisende Beladeseite mit der sukzessiven Abfolge bei der Bereitstellung und Beladung von Paletten mit Frachtgut;
- Figur 6: in entsprechend Figur 5 schematischer Draufsicht die Be- und Entladeseite einer Anlage zum gleichzeitigen Be- und Entladen von mit Frachtgut belegten Paletten auf bzw. von Waggons eines Schienenfahrzeugs;
- Figuren 7 bis 12: im Querschnitt durch eine der drei Fördermittel-Stationen der Figur 6 aufeinanderfolgende Abläufe vom Beginn (vgl. Figur 7) bis zum Ende (vgl. Figur 10) eines Be- und Entladevorgangs sowie einen solchen Vorgang mit Einsatz von zwei bereitgestellten Paletten (Fig. 11 und 12);
- Figur 13: als Einzelheit einen als Tandem-Hydraulikzylinder ausgebildeten Fördermittel-Verfahrantrieb in der Gesamtansicht;
- Fig. 14: im Längsschnitt einen 4-achsigen Güterwagen als Tieflader mit aufgelegter Transportpalette und von dieser getragenem Sattelanhänger;
- Fig. 15: die Transporteinheit nach Fig. 14 im Querschnitt;
- Fig. 16: die Transporteinheit nach Fig. 14 in der Draufsicht;
- Fig. 17: im Längsschnitt eine Ausführung mit einem 8-achsigen Niederflurwagen als Transportmittel; und
- Fig. 18: im Querschnitt eine Be- und Entladeeinrichtung unter Verwendung der in Fig. 17 gezeigten Niederflurwagen.

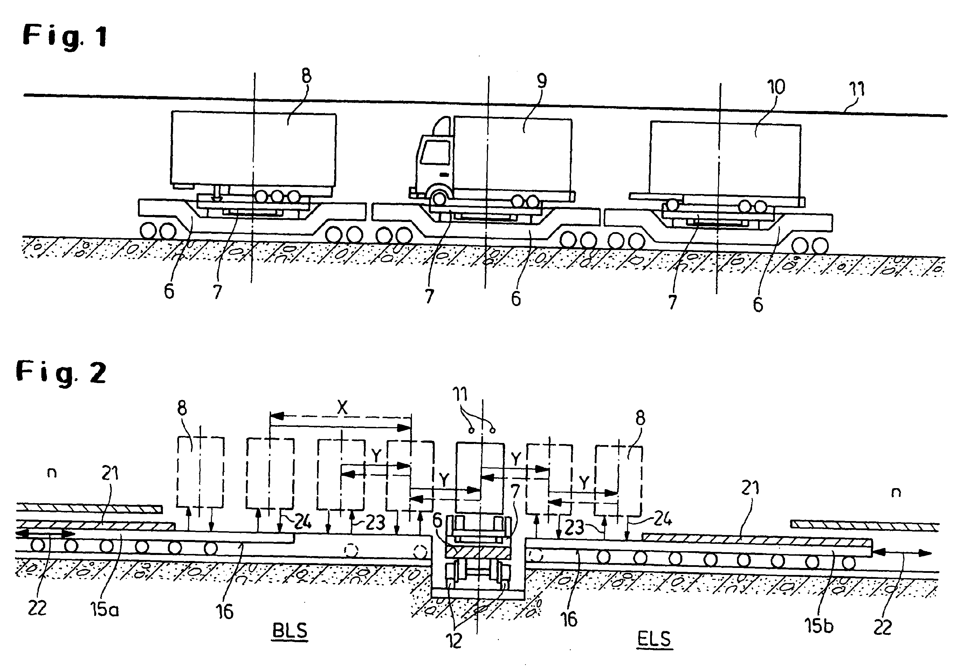

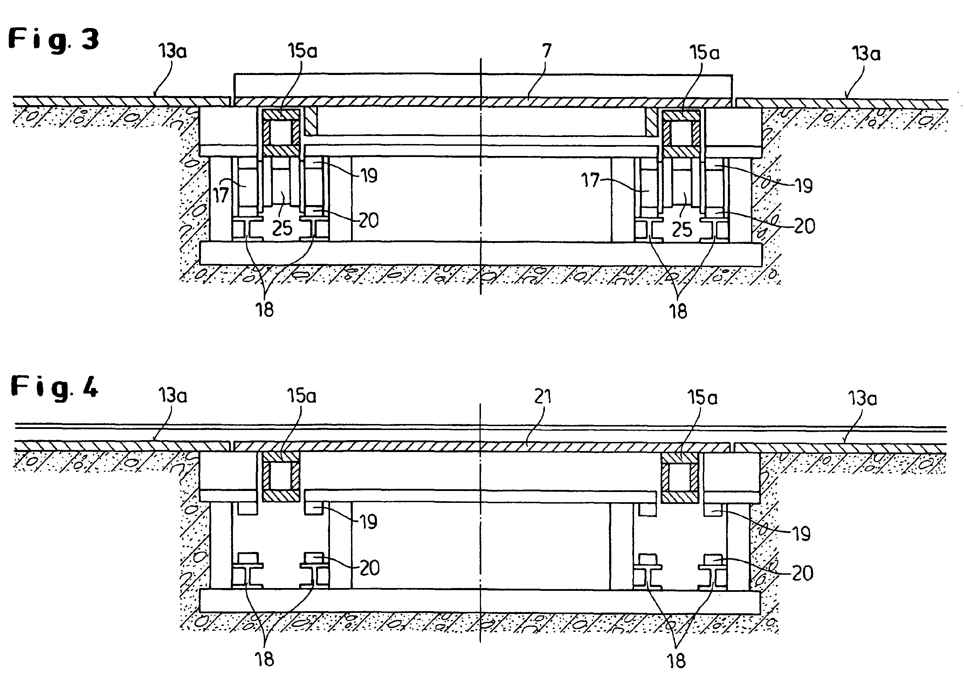

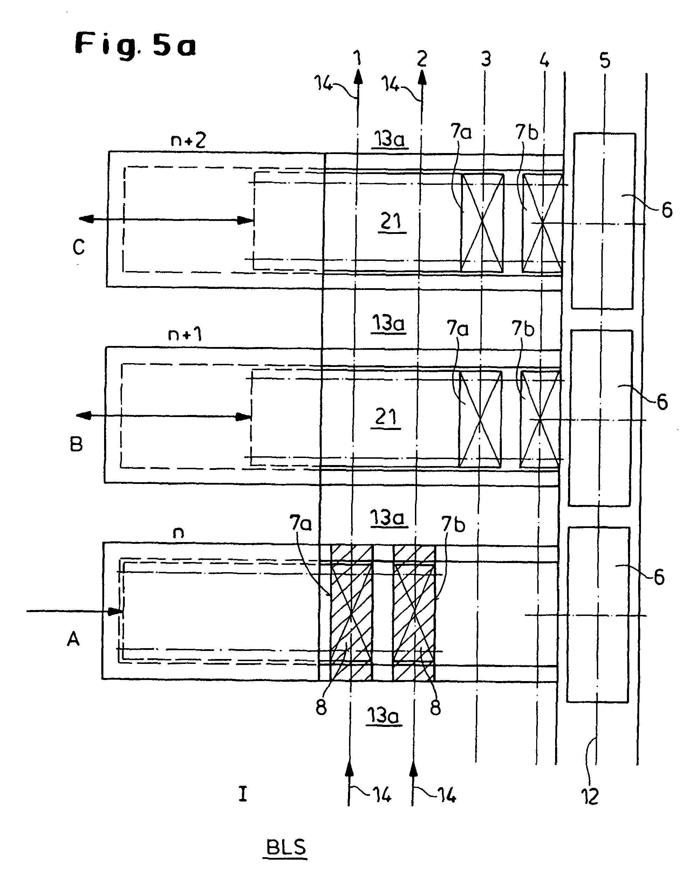

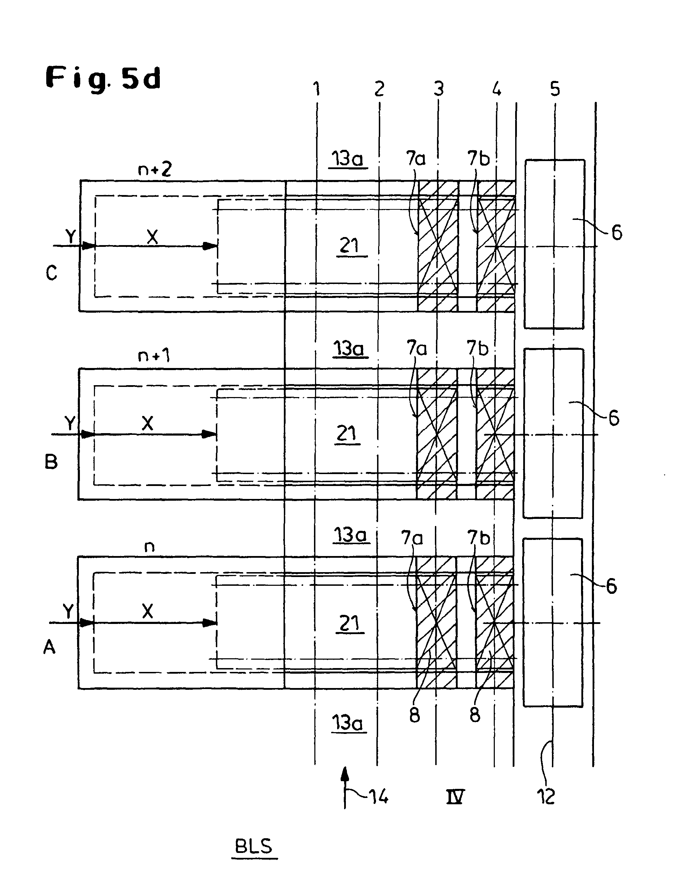

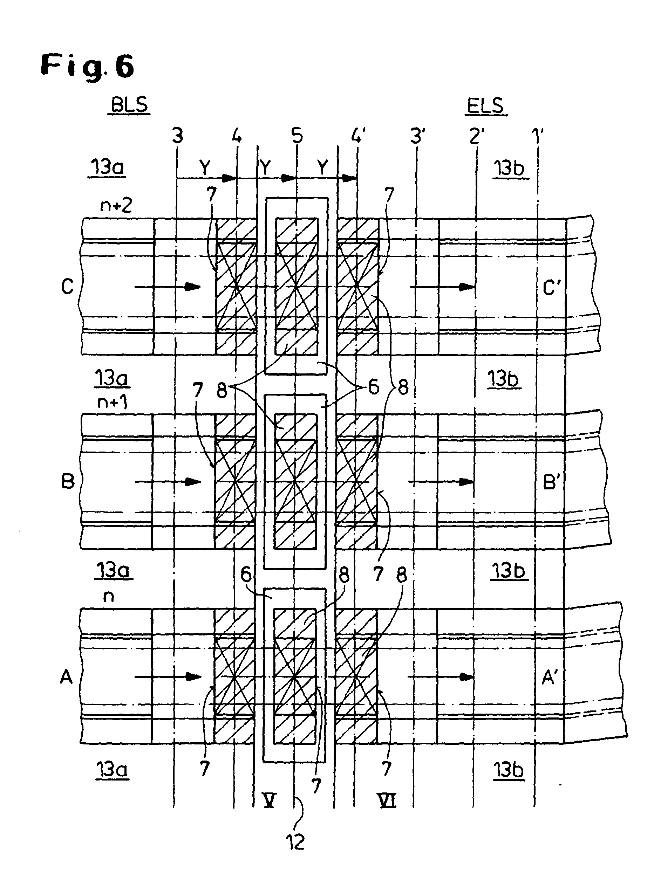

In Fig. 1 sind von einem weiter nicht gezeigten Schienenfahrzeug bzw. Güterzug drei Waggons 6 dargestellt mit darauf zur Veranschaulichung unterschiedlichem Frachtgut, das jeweils auf einer auf den Waggons gesicherten Palette 7 angeordnet ist, nämlich ein Sattelanhänger 8, ein LKW 9 und ein Anhänger 10. Dieses Frachtgut wird unbeschadet von Oberleitungen 11 von der Seite her ver- bzw. entladen. Dazu sind gemäß Fig. 3 und 4 (vgl. auch die Fig. 5a, 5d und 6) beidseitig in Längsrichtung von Gleisen 12 auf sich parallel zu diesen erstreckenden, mit einer Zu- und einer Ausfahrt versehenen Rampen 13a bzw. 13b einander gegenüberliegend im Ausführungsbeispiel mehrere Fördermittelstationen n, n+1, n+2, n-bis ausgebildet. Sowohl die Rampe 13a auf der Beladeseite BLS als auch die Rampe 13b auf der Entladeseite ELS ist für die zu verladenden bzw. zu entladenden Kraftfahrzeuge 9 bzw. von den das Frachtgut 8, 9, 10 zutransportierenden Kraftfahrzeugen in Fahrrichtung 14 - vgl. die Pfeile in Fig. 5a - stets ungehindert zu befahren.

In jeder der hier mehreren Fördermittelstation n, n+1, n+2 n-bis ist in den Rampen 13a, 13b als Fördermittel ein Hubbalken 15a, 15b integriert. Diese besitzen an ihren vorderen, den Gleisen 12 zugewandten Enden Be- und Entladebrücken 16, auf denen das zu ver- bzw. zu entladende Frachtgut 8 bis 10, abgestellt auf Paletten 7, die in Fig. 2 der Einfachheit halber nicht dargestellt sind, während des Förderns zwischengelagert wird. Die Hubbalken 15a, 15b werden mit Lauf- und Stützrädern 17 (vgl. Fig. 3) auf Schienen 18 in Richtung des Doppelpfeils 22 (vgl. Fig. 2) entsprechend ihrer jeweiligen Förderaufgabe hin und her bewegt. Zu ihrer Stabilisierung bei einem kopflastigen Transport von Frachtgütern sind in ihren Fahrbahnen obere und untere Führungen 19 bzw. 20 vorgesehen (vgl. Fig. 3).

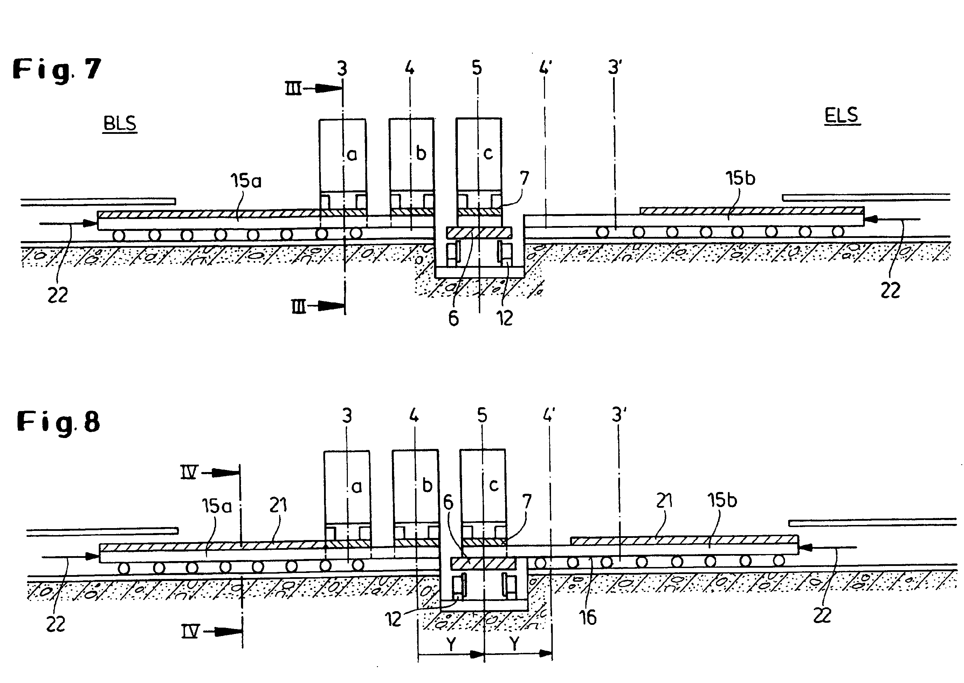

Die Fig. 3 und 4 zeigen als Schnitt durch die Rampe 13a der Beladeseite BLS (vgl. die Fig. 7 und 8) einerseits eine von den Hubbalken 15a unterfahrene Palette 7 und andererseits in Fig. 4 den Hubbalken ohne Palette, womit besser zu erkennen ist, daß die Hubbalken 15a, 15b mit fest verbundenen Fahrbahn-Abdeckungen 21 ausgebildet sind, deren Funktion noch erläutert werden wird.

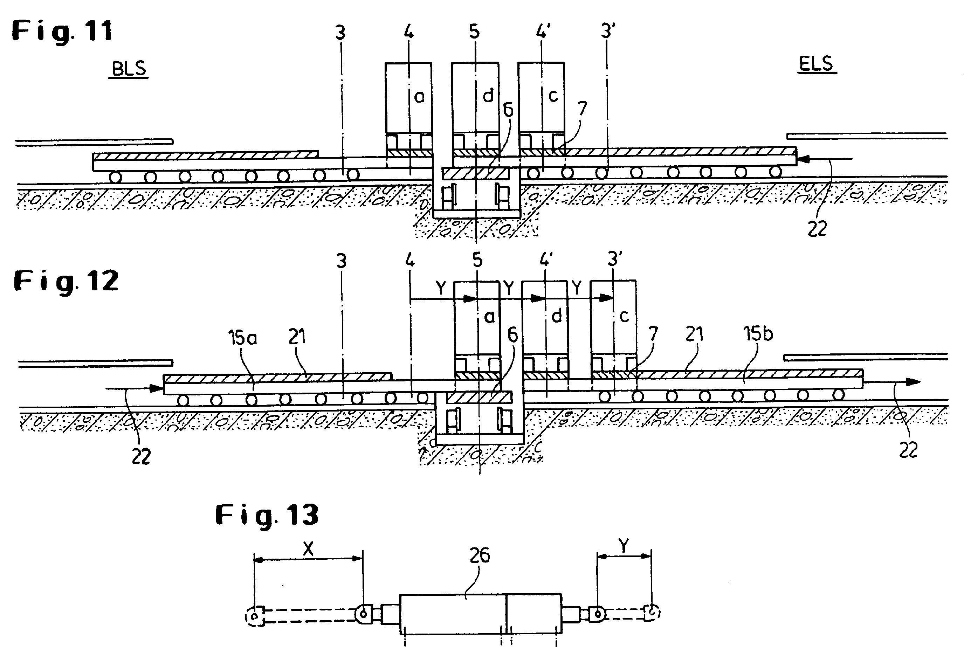

Zum Bewegen der Hubbalken 15a, 15b in Pfeilrichtung 22 (vgl. Fig. 2, 7 bis 12) sind diesen als Antrieb Tandem-Hydraulikzylinder 26 (vgl. Fig. 13) zugeordnet. Diese ermöglichen in vorteilhafter Weise eine sich aus einem langen Hub X und einem zur Beladung und Entladung der Waggons 6 geeigneten kurzen Hub Y zusammensetzende Transportbewegung. Die Hubbalken 15a, 15b führen daneben entsprechend ihrer Förderaufgabe Hebe- und Senkbewegungen 23 bzw. 24 durch, wie durch die Richtungspfeile in Fig. 2 angedeutet. Dies wird beispielsweise hydraulisch durch ein gekoppeltes, gemeinsames Drehen der exzentrischen Achsen 25 zu den Laufrädern 17 erreicht.

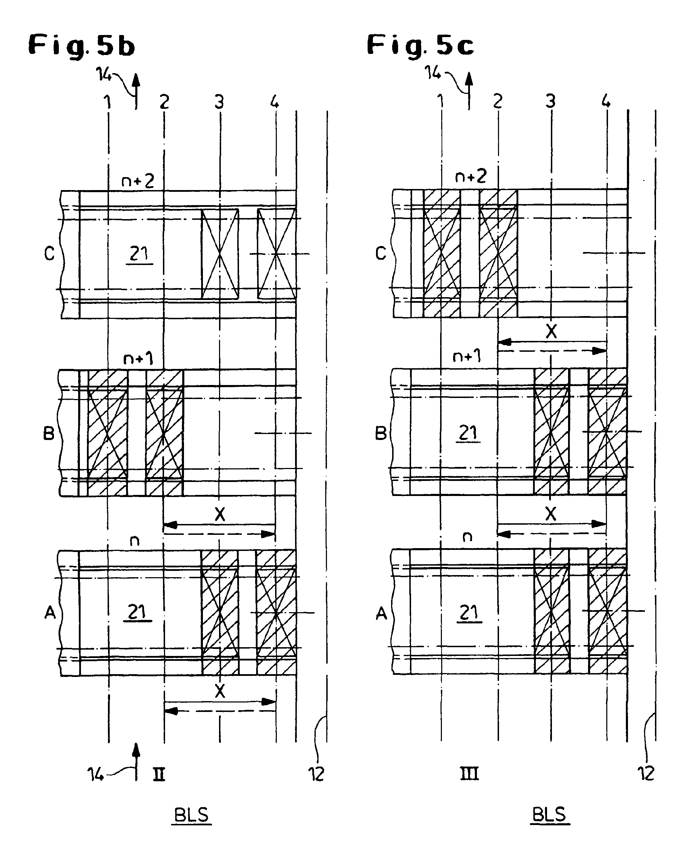

Die Vorbereitung der Beladung eines Güterzuges, bevor dieser eingefahren ist, wird anhand der Fig. 5a bis 5d am Beispiel von drei Fördermittelstationen n, n+1, n+2 mit jeweils zwei Paletten 7a, 7b beschrieben. In den Figuren nicht dargestellte Zugmaschinen fahren in Fahrtrichtung 14 auf die Rampe 13a der Beladeseite BLS auf, geben dort ihre Sattelanhänger 8 auf die in A1 und A2 bereitstehenden Paletten 7a, 7b ab und verlassen anschließend über die aufgrund der Hubbalken-Abdeckungen 21 zur Verfügung gestellten Fahrbahnen der Positionen B1 und B2 bzw. C1 und C2 die Rampe 13a über deren endseitige Ausfahrt, falls die Zugmaschinen nicht mit transportiert werden sollen. Die mit den Sattelanhängern 8 beladenen Paletten 7a, 7b der Fördermittelstation n werden danach mittels der Hubbalken bei gleichzeitiger Abdeckung der Positionen A1 und A2, so daß wiederum eine geschlossene Fahrbahn vorliegt, in die Positionen A3 und A4 gehoben (vgl. Fig. 5b). Dies geschieht mit dem Transporthub X. Die in der Fördermittelstation n+1 in den Positionen B3 und B4 bereitstehenden Paletten 7a, 7b werden mit dem langen Transporthub X in die Positionen B1 und B2 gebracht, dort von den Zugmaschinen beladen, die - wenn sie nicht auch transportiert werden sollen - dann über die Fahrbahn-Abdeckung 21 in den Positionen C1 und C2 der Fördermittelstation n+2 die Rampe verlassen.

Die beladenen Paletten werden dann bei wiederum gleichzeitiger Abdeckung der Positionen B1 und B2 in die Positionen B3 und B4 - vgl. die Fig. 5b und 5c - gehoben bzw. transportiert. In gleicher Weise werden die Paletten 7a, 7b der Fördermittelstation n+2 aus C3 und C4 zunächst nach Position C1 und C2 gebracht, so daß die Zugmaschinen zur Beladung dieser Paletten in Fahrtrichtung 14 ungehindert über die Abdeckungen 21 bzw. Fahrbahnen der Positionen A1 und A2 sowie B1 und B2 bis zu C1 und C2 fahren können. Anschließend werden auch diese beladenen Paletten 7a, 7b der Fördermittelstation n+2 mit dem großen Transporthub X in die gleisnahe Beladeposition C3 und C4 verlagert. Wie die Fig. 5d zeigt, stehen damit alle beladenen Paletten 7a, 7b in ihren Verlade-Positionen parallel zu den Waggons 6 eines eingefahrenen Güterzuges. Die Waggons 6 können nunmehr mittels der beidseitigen Hubbalken 15a, 15b (vgl. Fig. 2 und 7 bis 12) zeitgleich ent- und beladen werden.

Das Überheben der beladenen Paletten 7a, 7b aus den gleisnahen Beladepositionen der Fig. 5d auf die Waggons und das damit einhergehende Entladen der Waggons 6 mit den auf diesen ruhenden, das Frachtgut 8 aufnehmenden Paletten geschieht mit dem kurzen Transporthub Y (vgl. Fig. 2). Das Abtransportieren der auf die jeweilige Rampe abgestellten entladenen Paletten mit dem Frachtgut erfolgt in der zuvor für das Beladen und Bereitstellen beschriebenen Weise, so daß auf der Rampe ein stets freier Abfahrweg für die Kraftfahrzeuge zur Verfügung steht; in den Fig. 5b und 5c ist dieser Ablauf durch die gestrichelt dargestellten horizontalen Pfeile angedeutet.

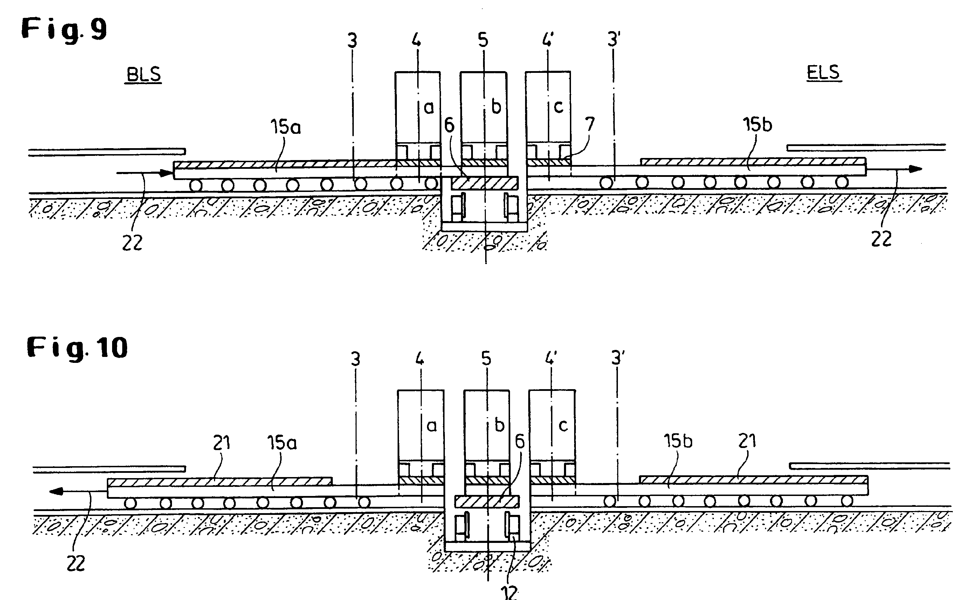

Die Abfolge des gleichzeitigen Be- und Entladens von der Beladeseite BLS bzw. Entladeseite ELS her wird anhand der Fig. 7 bis 10 näher beschrieben. Ein auf den Gleisen 12 vorgefahrener Güterzug steht mit seinen das Frachtgut c auf Paletten 7 aufnehmenden Waggons 6 gemäß Fig. 7 in Position. Zwei beladene Paletten a und b stehen bereit zur Beladung. Der Entlade-Hubbalken 15b fährt über den Waggon 6 und mit seiner Entladebrücke 16 unter die Palette 7 und hebt diese an. Gleichzeitig werden die an der Beladeseite BLS bereitstehenden Paletten a, b mittels der Belade-Hubbalken 15a angehoben (vgl. Fig. 8). Der Entlade-Hubbalken 15b fährt nach Fig. 9 die Palette c aus der Position 5 in die Position 4' und gleichzeitig überführt der Belade-Hubbalken 15a die Palette a von Position 3 in Position 4 sowie die Palette b von Position 4 in Position 5, d.h. über den Waggon 6. Die Hubbalken 15a, 15b werden abgesenkt und setzen damit die Paletten a, b, c in den Positionen 4, 5 bzw. 4' ab.

Dieser gleichzeitige Be- und Entladevorgang ist in Fig. 6 für alle der im Ausführungsbeispiel drei Fördermittelstationen n, n+1, n+2 gezeigt. Während die an der Beladeseite BLS bereitgestellten, beladenen Paletten 7 aus den Positionen A4, B4 und C4 auf die Waggons bzw. die Positionen A5, B5 und C5 gehoben und dort abgesetzt werden, werden gleichzeitig die mit dem Frachtgut 8 beladenen Paletten der Waggons 6 von den Positionen A5, B5 und C5 in die Positionen A'4', B'4' und C'4' gehoben. Die Hubbalken 15a der Beladeseite BLS fahren nach dem Absetzen der Paletten mit dem Frachtgut 8 auf den Waggons 6 in ihre rückwärtige Position (vgl. Fig.10). Der neu beladene Güterzug ist damit nach dem gleichzeitigen Entlade- und Beladevorgang in kurzer Zeit wieder abfahrbereit.

Falls weitere Fahrzeuge und/oder Frachtgüter 8, 9, 10 auf den Güterzug bzw. die Waggons 6 geladen oder von diesen entladen werden sollen, muß der Güterzug vorgezogen werden und der vorbeschriebene Vorgang entsprechend den Fig. 8 bis 10 für die Ausgangsposition nach Fig. 11 wiederholt werden. Der Entlade-Hubbalken 15b überführt die beladene Palette d von dem Waggon 6, d.h. aus der Position 5 in die Position 4' und gleichzeitig die Palette c von Position 4' in Position 3'. Der Belade-Hubbalken 15a hebt gleichzeitig die Palette a auf den Waggon 6 in Position 5 (vgl. Fig. 12). Anschließend wird der Belade-Hubbalken 15a abgesenkt und in seine Ausgangsposition zurückgefahren. In diesem Fall steht der Güterzug nach dem zweiten Entlade- und Beladevorgang abfahrbereit. Beim Einsatz von z.B. vier Paletten je Hubbalken entsteht im Vergleich zur Minimal-Ausführung mit nur einer Palette je Be- und Entladestation die vier-fache Ent- und Belade-Kapazität. Der Güterzug braucht dann nur dreimal in die Positionen für den jeweils folgenden Be- und Entladevorgang vorgezogen zu werden.

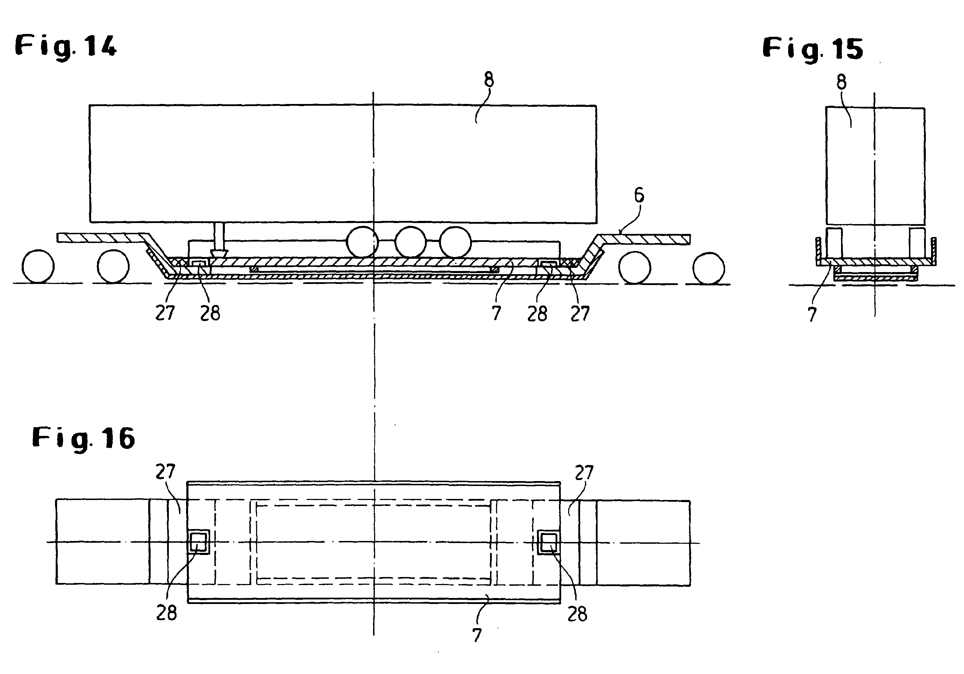

Die Fig. 14 bis 16 zeigen als Längs- und Querschnitt sowie als Draufsicht einen 4-achsigen Güterwagen 6 als Tieflader mit aufgelegter Transportpalette 7 und darauf abgestelltem Sattelanhänger 8.

Während des Transportes der Frachtgüter auf den Güterwagen 6 sind die Paletten 7 an den Enden in Längsrichtung durch Sattelflächen 27 und in Querrichtung durch Zentrierbolzen 28 auf dem Güterwagen 6 gesichert.

Sicherung und Zentrierung der Paletten 7 erfolgen automatisch beim Absetzen der Paletten durch den Hubbalken 15a (gemäß Fig. 2) auf den Güterwagen 6. Das Entsichern erfolgt umgekehrt automatisch beim Anheben der Paletten 7 durch den Hubbalken 15b beim Entladen der Frachtgüter von dem Güterwagen 6.

Für das Sichern und Entsichern der Frachtgüter auf den Güterwagen entsteht kein zusätzlicher Personal- und Zeitaufwand während der Standzeit des Güterzuges in den Be- und Entlade-Stationen.

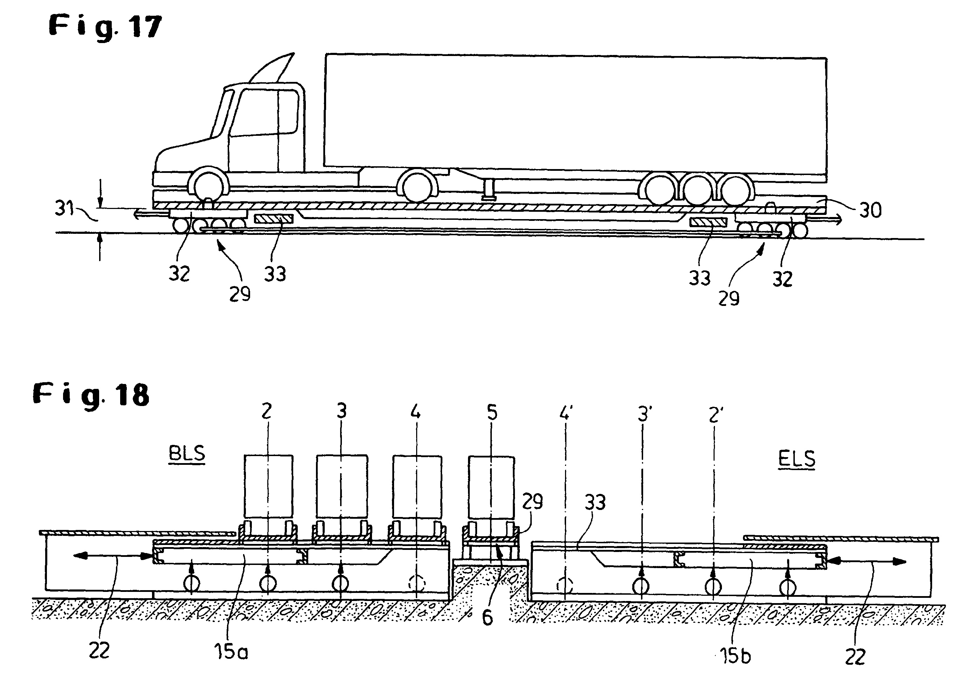

Die Figuren 17 und 18 zeigen für einen gleichen Ablauf wie zuvor beschrieben das Be- und Entladen von großvolumigem Frachtgut - hier Zugmaschine mit Sattelanhänger - auf einen Güterwagen, und zwar unter Einsatz von 8-achsigen Niederflurwagen 29. Auf den vorderen und hinteren Rad-Drehgestellen 32 der Niederflurwagen 29 liegt eine über Zapfen der Drehgestelle 32 längs und quer zentrierte Brücke 30 auf. Der Freiraum 31 zwischen einerseits Schienenoberkante und anderseits Unterkante der Brücke 30 ist ausreichend, um es Traggabeln 33 der Hubbalken 15 a bzw. 15 b zu erlauben, darin einzutauchen und die Brücke 30 samt Last abzuheben bzw. bei der Beladung auf die Drehgestelle 32 aufzusetzen. Die Brücke 30 dient hierbei gleichzeitig als Palette.

## Patentansprüche

1. Verfahren zum Ver- bzw. Entladen von auf Paletten angeordnetem, großvolumigem Frachtgut wie Container, Sattelanhänger mit und ohne Zugmaschine, LKW oder Anhänger, das von der Straße auf ein Schienenfahrzeug und umgekehrt verbracht wird, wozu beidseitig von Gleisen Verladerampen mit einzelnen oder mehreren in Gleislängsrichtung nacheinanderfolgenden, separaten, das Verladegut quer zur Gleislängsrichtung zu- und abtransportierenden Fördermitteln vorgesehen sind,
**gekennzeichnet durch**
die folgenden Schritte:
a) Bereitstellen von Leerpaletten in den einzelnen mit Hubbalken (15a,15b) ausgestatteten Fördermittelstationen (n, n+1, n+2, n-bis) der Beladeseite in der Weise, daß die Leerpalette bzw. -paletten der in Fahrtrichtung (14) des Straßenfahrzeugs ersten Fördermittel-Beladestation (n) in einer gleisentfernten Position (1+2) und die Leerpaletten der folgenden Fördermittel-Beladestationen (n+1, n+2, n-bis) in einer gleisnahen Position (3+4) abgestellt werden,
b) Laden der gleisentfernten, auf dem Fördermittel ruhenden Palette bzw. Paletten mit dem Frachtgut und
c) Fördern der beladenen Palette bzw. Paletten der ersten Fördermittelstation (n) in die gleisnahe Position (3+4)
d) Fördern der Leerpaletten der Folge-Beladestation (n+1) aus der gleisnahen in die gleisentfemte Position (1+2) und Beladen der Paletten,
e) Fördern der beladenen Palette bzw. Paletten der Beladestation (n+1) in die gleisnahe Position (3+4),
f) sukzessives Durchführen der Schritte b) bis c) bzw. d) und e) in den jeweils nächsten Fördermittel-Beladestationen (n+2, n-bis),)
g) gleichzeitiges Fördern und Absetzen aller beladenen Paletten aus ihren gleisnahen Positionen (4) auf die Schienenfahrzeuge.

2. Verfahren nach Anspruch 1,
**dadurch gekennzeichnet,**
**daß** sich den Schritten a und b) und den Schritten c und d) vor jeweils den Folgeschritten die Wegfahrt des Straßenfahrzeugs über an den freien, gleisentfernten Positionen (1+2) der folgenden Fördermittel-Beladestationen (n+1, n+2, n-bis bzw. n+2, n-bis) vorgesehenen Fahrbahnen (21) anschließt.

3. Verfahren nach Anspruch 1 oder 2
**dadurch gekennzeichnet,**
**daß** zeitgleich mit dem Schritt h) von den Fördermitteln der gegenüberliegenden Entladeseite beladene Paletten von dem Schienenfahrzeug abgenommen und wegtransportiert werden.

4. Verfahren nach Anspruch 3,
**dadurch gekennzeichnet,**
**daß** die Fördermittel der Beladeseite und der Entladeseite mit sich überlagernden Transportbewegungen betrieben werden.

5. Verfahren nach einem der Ansprüche 1 bis 4,
**dadurch gekennzeichnet,**
**daß** die Fördermittel in ihrem Bewegungsablauf lineare Fahrbewegungen sowie Hub- und Senkbewegungen durchführen.

6. Verfahren nach Anspruch 5,
**dadurch gekennzeichnet,**
**daß** die Fördermittel mit einem langen Transport-Verfahrweg (X) und einem kürzeren Be- und Entladeverfahrweg (Y) beaufschlagt werden.

7. Verfahren nach einem der Ansprüche 1 bis 6,
**dadurch gekennzeichnet,**
**daß** mit den Verfahrbewegungen der Fördermittel einhergehend die gleisentfemten Positionen der Fördermittel-Beladestationen mit Fahrbahn-Abdeckungen (21) belegt werden.

8. Verfahren nach einem der Ansprüche 1 bis 7,
**dadurch gekennzeichnet,**
**daß** bei einem Be- und/oder Entladevorgang mit pro Fördermittel-Beladestation bzw. - Entladestation mehreren Paletten (7a, 7b) das Schienenfahrzeug nach jedem Be- und/oder Entladevorgang zur folgenden Entund Beladung vorgefahren wird.

9. Vorrichtung zum Ver- bzw. Entladen von auf Paletten angeordnetem, großvolumigem Frachtgut wie Container, Sattelanhänger mit und ohne Zugmaschine, LKW oder Anhänger, das von der Straße auf Güterwagen von Schienenfahrzeugen und umgekehrt verbracht wird, wozu beidseitig von Gleisen Verladerampen mit einzelnen oder mehreren in Gleislängsrichtung nacheinanderfolgen, separaten, das Verladegut quer zur Gleislängsrichtung zu- und abtransportierenden Fördermitteln vorgesehen sind, insbesondere zum Durchführen des Verfahrens nach Anspruch 1,
**dadurch gekennzeichnet,**
**daß** die in den Fördermittel-Belade- und Fördermittel-Entladestationen (n, n+1, n+2, n-bis) angeordneten Fördermittel als Hubbalken (15a, 15b) ausgebildet sind.

10. Vorrichtung nach Anspruch 9,
**gekennzeichnet durch**
mit den Hubbalken (15a, 15b) fest verbundenen Fahrbahn-Abdeckungen (21).

11. Vorrichtung nach Anspruch 9 oder 10,
**dadurch gekennzeichnet,**
**daß** den Hubbalken-Lauf- und Stützrädern (17) in ihren Fahrbahnen obere und untere Führungen (19, 20) zugeordnet sind.

12. Vorrichtung nach einem der Ansprüche 8 bis 10,
**dadurch gekennzeichnet,**
**daß** die linearen Verfahrantriebe der Hubbalken (15a, 15b) als Tandem-Hydraulikzylinder (22) ausgebildet sind.

13. Vorrichtung nach einem der Ansprüche 9 bis 12,
**dadurch gekennzeichnet,**
**daß** das Frachtgut (7 sowie 8, 9, 10) auf den Güterwagen (6) während des Transportes in Längs- und in Querrichtung gesichert ist.

14. Vorrichtung nach Anspruch 13,
**dadurch gekennzeichnet,**
**daß** an beiden Enden des Tieflader-Güterwagens (6) jeweils vor der Transportpalette (7) angeordnete Sattelflächen (27) die Sicherung in Längsrichtung und in die Transportpalette (7) eingreifende Zentrierbolzen (28) die Sicherung in Querrichtung übernehmen.

15. Vorrichtung nach einem der Ansprüche 9 bis 14,
**dadurch gekennzeichnet,**
**daß** zum Transport des Frachtgutes Niederflurwagen (29) zum Einsatz kommen, deren Brücke (30) als Palette dient.

## Claims

1. Method for loading and unloading large-volume freight arranged on pallets, such as containers, semi-trailers with and without tractor, trucks or trailers, which are transferred from the road to a rail vehicle and vice versa, for which purpose loading ramps are provided on both sides of tracks, with individual or several separate conveying means, arranged one after the other in the longitudinal direction of the track and conveying the goods to be loaded backwards and forwards transverse to the longitudinal direction of the track,
**characterised by**
the following stages:
a) supply of empty pallets in the individual conveyor stations (n, n+1, n+2, n-bis) equipped with wooden lifting beams on the loading side so that the empty pallet or pallets of the first conveyor loading station (n) in the direction of travel (14) of the road vehicle is/are parked in a position (1+2) away from the track, and so that the empty pallets in the subsequent conveyor loading stations (n+1, n+2, n-bis) are parked in a position (3+4) close to the track,
b) loading of the pallet or pallets carrying the freight, away from the track, resting on the conveying means, and
c) conveying of the loaded pallet or pallets from the first conveyor station (n) into the position (3 +4) close to the track,
d) conveying of the empty pallets from the next loading station (N+1) from the position close to the track to the position (1+2) away from the track, and loading of the pallets,
e) conveying of the loaded pallet or pallets from the loading station (n+1) into the position (3+4) close to the track,
f) successive execution of stages b) to c) and d) and e) in the next conveyor loading stations (n+2, n-bis),
g) simultaneous conveying and depositing of all the loaded pallets from their positions (4) close to the tack onto the rail vehicles.

2. Method according to Claim 1,
**characterised in that**
the exit of the road vehicle via trackways (21) provided in the free positions (1_2) away from the tack of the successive conveyor loading stations (n+1, n+2, n-bis and n+2, n-bis) is connected to sections a and b) and sections c and d) before the successive stages.

3. Method according to Claim 1 or 2,
**characterised in that**
pallets loaded at the same time as stage h) from the conveying means on the opposite unloading side are picked up from the rail vehicle and transported away.

4. Method according to Claim 3,
**characterised in that**
the conveying means on the loading side and unloading side are operated with overlapping conveying movements.

5. Method according to any one of Claims 1 to 4,
**characterised in that**
the conveying means perform linear travel movements, as well as lifting and lowering movements, in their movement process.

6. Method according to Claim 5,
**characterised in that**
the conveying means are loaded with a long conveying process travel (X) and a shorter loading and unloading process travel (Y).

7. Method according to any one of Claims 1 to 6,
**characterised in that**
the positions of the conveying means loading stations away from the track are provided with trackway covers (21), accompanying the travel movements of the conveying means.

8. Method according to any one of Claims 1 to 7,
**characterised in that**
during a loading and/or unloading process with several pallets (7a, 7b) per conveyor loading station or unloading station, the rail vehicle is advanced to the next unloading and loading operation after each loading and/or unloading process.

9. Device for loading and unloading large-volume freight arranged on pallets, such as containers, semi-trailers with and without tractor, trucks or trailers, which is transferred from the road onto goods wagons of rail vehicles and vice versa, for which purpose loading ramps with individual or several separate conveying means, one behind the other in the longitudinal track direction, transporting the goods to be loaded backwards and forwards transverse to the longitudinal track direction, in particular for carrying out the method according to Claim 1,
**characterised in that**
the conveying means arranged in the conveyor loading and conveyor unloading stations (n, n+1, n+2, n-bis) are designed as lifting beams (15a, 15b).

10. Device according to Claim 9,
**characterised by**
trackway covers (21) rigidly connected to the lifting beams (15a, 15b).

11. Device according to Claim 9 or 10,
**characterised in that**
upper and lower guides (19, 20) are associated with the lifting beam runners and support wheels (17) in their trackways.

12. Device according to any one of Claims 8 to 10,
**characterised in that**
the linear travel drives of the lifting beams (15a, 15b) are designed as tandem hydraulic cylinders (22).

13. Device according to any one of Claims 9 to 12,
**characterised in that**
the freight (7 and 8, 9, 10) is secured on the goods wagons (6) during transport in the longitudinal and transverse directions.

14. Device according to Claim 13,
**characterised in that**
saddle surfaces (27) arranged at both ends of the low-loader goods wagon (6) in front of each transport pallet (7) secure the fright in the longitudinal direction, and centring bolts (28) engaging in the transport pallet (7) secure the freight in the transverse direction.

15. Device according to Claims 9 to 14,
**characterised in that**
low-loader wagons (29), whose bridge (30) serves as a pallet, are used for transporting the freight.

## Revendications

1. Procédé de chargement et de déchargement de fret de grand volume disposé sur des palettes comme des conteneurs, des semi-remorques avec ou sans engin de traction, des poids lourds ou des remorques et qui est transféré de la route sur un véhicule ferroviaire et inversement, ce pour quoi il est prévu des deux côtés des voies des rampes de chargement avec des moyens de transport individuels ou pluriels séparés se suivant dans le sens longitudinal de la voie, apportant et emportant la marchandise de chargement transversalement au sens longitudinal de la voie,
**caractérisé par**
les étapes suivantes :
a) mise à disposition de palettes vides dans les différentes stations à moyens de transport (n, n+1, n+2, n-bis) équipées de longerons (15a, 15b) du côté du chargement de manière à ce que la ou les palettes vides de la première station de chargement à moyens de transport (n) dans le sens de circulation (14) du véhicule routier soient déposées dans une position éloignée de la voie (1+2) et que les palettes vides des stations de chargement à moyens de transport suivantes (n+1, n+2, n-bis) soient déposées à une position proche de la voie (3+4),
b) chargement de la ou des palettes éloignées de la voie et reposant sur le moyen de transport avec le fret et
c) transport de la ou des palettes chargées de la première station à moyens de transport (n) vers la position proche de la voie (3+4),
d) transport des palettes vides de la station de chargement suivante (n+1) de la position proche de la voie vers la position éloignée de la voie (1+2) et chargement des palettes,
e) transport de la ou des palettes chargées de la station de chargement (n+1) vers la position proche de la voie (3+4),
f) réalisation successive des étapes b) à c) ou d) et e) dans les stations de chargement respectivement suivantes (n+2, n-bis),
g) transport et dépose simultanée de toutes les palettes chargées depuis leur position (4) proche de la voie sur les véhicules ferroviaires.

2. Procédé selon la revendication 1,
**caractérisé en ce que**
les étapes a) et b) et les étapes c) et d), respectivement avant les étapes suivantes, sont suivies par le départ du véhicule ferroviaire sur les pistes de circulation (21) prévues aux positions libres éloignées de la voie (1+2) des stations de chargement à moyens de transport suivantes (n+1, n+2, n-bis ou n+2, n-bis).

3. Procédé selon la revendication 1 ou 2,
**caractérisé en ce que**,
en même temps que l'étape h), les palettes chargées par les moyens de transport du point de déchargement opposé sont prises et emportées par le véhicule ferroviaire.

4. Procédé selon la revendication 3,
**caractérisé en ce que**
les moyens de transport du point de chargement et du point de déchargement fonctionnent avec des mouvements de transport se superposant.

5. Procédé selon une des revendications 1 à 4,
**caractérisé en ce que**
les moyens de transport réalisent, dans le déroulement de leur mouvement, des mouvements de circulation linéaires ainsi que des mouvements de levage et de descente.

6. Procédé selon la revendication 5,
**caractérisé en ce que**
les moyens de transport sont sollicités par une longue voie de déplacement de transport (X) et une plus courte voie de circulation de chargement et déchargement (Y).

7. Procédé selon une des revendications 1 à 6,
**caractérisé en ce que**,
allant de pair avec les mouvements de déplacement des moyens de transport, les positions éloignées de la voie des stations de chargement à moyens de transport sont revêtues de recouvrements de piste de circulation (21).

8. Procédé selon une des revendications 1 à 7,
**caractérisé en ce que**,
dans le cas d'un processus de chargement et/ou de déchargement avec plusieurs palettes (7a, 7b) par station de chargement ou de déchargement à moyens de transport, le véhicule ferroviaire, après chaque processus de chargement et/ou de déchargement, est avancé vers le prochain déchargement et chargement.

9. Dispositif de chargement ou de déchargement de fret de grand volume disposé sur des palettes, comme des conteneurs, des semi-remorques avec et sans engin de traction, des poids lourds ou des remorques et qui est transféré de la route sur des wagons de marchandises de véhicules ferroviaires et inversement, ce pour quoi il est prévu des deux côtés des voies des rampes de chargement avec des moyens de transport individuels ou pluriels séparés se suivant dans le sens longitudinal de la voie, apportant et emportant la marchandise de chargement transversalement au sens longitudinal de la voie, notamment pour la réalisation du procédé selon la revendication 1,
**caractérisé en ce que**
les moyens de transport disposés dans les stations de chargement à moyens de transport et de déchargement à moyens de transport (n, n+1, n+2, n-bis) sont réalisés sous forme de longerons (15a, 15b).

10. Dispositif selon la revendication 9,
**caractérisé par**
des recouvrements de piste de circulation (21) connectés fixement aux longerons (15a, 15b).

11. Dispositif selon la revendication 9 ou 10,
**caractérisé en ce que**,
aux roues de roulement et de soutien des longerons (17), dans leurs pistes de circulation, sont associés des guides supérieurs et inférieurs (19, 20).

12. Dispositif selon une des revendications 8 à 10,
**caractérisé en ce que**
les propulsions linéaires de déplacement des longerons (15a, 15b) sont réalisées sous forme de vérins hydrauliques en tandem (22).

13. Dispositif selon une des revendications 9 à 12,
**caractérisé en ce que**
le fret (7 ainsi que 8, 9, 10) est fixé sur le wagon de marchandises (6) pendant le transport dans le sens longitudinal et transversal.

14. Dispositif selon la revendication 13,
**caractérisé en ce que**,
aux deux extrémités du wagon de marchandises à plate-forme surbaissée (6), des surfaces de remorque (27) disposées respectivement devant la palette de transport (7) assurent la fixation dans le sens longitudinal et que des goujons de centrage (28) s'engrenant dans la palette de transport (7) assurent la fixation dans le sens transversal.

15. Dispositif selon une des revendications 9 à 14,
**caractérisé en ce que**,
pour transporter le fret, on utilise des wagons à plancher bas (29) dont le pont (30) sert de palette.
